# EUROPEAN PATENT APPLICATION

(11) **EP 2 108 998 A1**
(43) Date of publication of application: **14.10.2009**
(21) Application number: 09004010.6
(22) Date of filing: 20.03.2009
(51) Int. Cl.: G03B 27/00, G07F 11/00

(54) **Delivery system**

(30) Priority: 26.03.2008 JP 2008081489
(71) Applicant: NORITSU KOKI CO., LTD., Wakayama-shi, Wakayama (JP)
(72) Inventor: Tsuji, Yuki, Wakayama-shi, Wakayama (JP); Matsushita, Masayuki, Wakayama-shi, Wakayama (JP); Yukawa, Masaaki, Wakayama-shi, Wakayama (JP)
(74) Representative: Lemcke, Brommer & Partner

(57) **Abstract**

A delivery system includes a plurality of storage units (46) each of which has a plurality of storage spaces (S) for storing therein recording media (P) according to the unit of customer's order, one or more feeding units (47, 46C, F) for feeding the recording media (P) stored in the storage unit (46) to the outside, an identification (ID) information obtaining section (44) for obtaining ID information, and a main delivering controlling unit (48) for controlling the storage unit (46) such that the main delivering controlling unit determines the position of a recording medium (P) stored in the storage unit (46) in relational association with the ID information and subsequently feeds this recording medium (P), when the ID information obtaining section (44) has obtained the ID information. The main delivering controlling unit (48) includes a storing space managing unit (48A) which obtains information on the number of a plurality of storage units (46) connected thereto and generates management information capable of managing the storage spaces (S) of the plurality of storage units (46) in a collective manner.

## Description

### BACKGROUND OF THE INVENTION

### FIELD OF THE INVENTION

The present invention relates to a delivery system including a storage unit having a plurality of storage spaces for storing therein recording media according to the unit of customer's order; a feeding unit for feeding the recording media stored in the storage unit to the outside; an identification (ID) information obtaining section for obtaining ID information; and a main delivering controlling unit operable to determine the position of a recording medium stored in the storage unit in relational association with the ID information and subsequently to feed this recording medium. The invention relates more particularly to a delivery system for delivering such recording medium as an image-printed print paper to a customer.

### DESCRIPTION OF THE RALATED ART

Constructions relating to the delivery system having the above-described construction are known from e.g. Japanese Patent Application "Kokai" No. 9-15827 and Japanese Patent Application "Kokai" No. 2003-157474. The Japanese Patent Application "Kokai" No. 9-15827 discloses an automated photographic laboratory processing system which includes a processor section for effecting printing process from a photographic film to a print paper, a shipping section for packing DPE products in a bag and returning them to a customer, and a central control section for effecting centralized control of the DPE products based on ID attached to a photographic film.

According to this construction of Japanese Patent Application "Kokai" No. 9-15827, when the system receives an order for printing from a negative film and receiving monetary charge payment therefor, the system will prepare a card that records, in its data recording area 46, the ID together with other information such as the date of order receipt and the expected date of delivery and give this card to the customer. After this order reception, printing exposure from the negative film to the print paper and then development of the printed paper are carried out. Thereafter, the negative film sheet and the prints will be packed together in a bag and dropped from a hopper section onto a table provided in a conveyer type stock section.

Also, a shipping unit controller correlates an address provided to this table with the ID provided to the bag. The conveyor type stock section includes a plurality of such tables, each of which is configured rotatable about a right/left axis. In operation, as the table is rotated about this axis, the DP bag placed thereon can be slid down to be fed. Next, when the customer inserts the card to the system and requests return, based on the ID provided in the card, the shipping controller unit searches the address from the ID and brings a table corresponding to the address into registry with a return opening and then rotates the table about the axis for slidably guiding and dropping the DP bag thereon, so that the bag can be taken out from the return opening.

In the case of the Japanese Patent Application No. 2003-157474, there is provided an automated print receiving/delivering apparatus including an automated receiving section and an automated delivering section, the apparatus being installed to e.g. an outer wall face of a shop. In operation, a customer inputs information of the order and information for identifying this customer per se and charges a film or a recording medium used in a digital camera or the like to a film receiving section. Then, the system prints out an order card in the form of a magnetic card printed with the order information, etc.

Next, printing operation from the film will be effected in e.g. a DPE shop and printed product (corresponding to a "recording medium" of the invention) will be put in a storage bag (corresponding to a "package" of the invention) and stored under this condition in a storage room. This storage room has a door which can be locked. Then, when the customer is to receive the printed product, he/she will insert the order cad into an order information conforming section and pay an amount of charge shown on a monitor to a charge receiving section. In response to this, the display will show a number of storage chamber corresponding to the order and the door of the storage chamber will be unlocked. So that, the customer can now open the door and take out the printed product.

In the case of small-sized DPE shops, the above techniques disclosed in the Japanese Patent Application "Kokai" No. 9-15827 and the Japanese Patent Application "Kokai" No. 2003-157474 will be useful for efficient operation with such limited number of shop attendants, since the techniques allow the process of delivering prints to the customer who ordered them to proceed in an unmanned manner, i.e. without any intervention by any shop attendant.

And, if a great amount or number of printed products are to be delivered to customers, it will be effective to install a plurality of the apparatuses (delivering apparatuses) disclosed in the Japanese Patent Application "Kokai" No. 9-15827 or the Japanese Patent Application "Kokai" No. 2003-157474.

For instance, in case a plurality of delivering devices are to be installed, it is needed to determine the number of the devices, depending on the number of customers to that shop. This number of the delivering devices to be installed differs from one shop to another and, even in a same shop, the number can vary, from one season to another. In this way, as the number does not have a fixed value, it is needed to manage each delivering device, in accordance with the number of the devices installed. Hence, there is a need for a managing system which allows flexible management.

As an alternative to the above, it may be also possible to employ a construction which allows change in the capacity of the storage unit storing recording media in a delivering apparatus. And, this alternative construction too will require a management system which allows flexible management in accordance with the variable capacity of the storage unit.

Now, the principal object of the present invention is to construct a delivering system in a rational manner, which system is capable of effecting management of storage spaces appropriately even when the storage units for storing recording media are increased or decreased in number.

### SUMMARY OF THE INVENTION

According to a characterizing feature of the present invention, a delivery system comprising:
a plurality of storage units, each of which has a plurality of storage spaces for storing therein recording media according to the unit of customer's order;
one or more feeding units for feeding the recording media stored in the storage unit to the outside;
an identification (ID) information obtaining section for obtaining ID information; and
a main delivering controlling unit for controlling said storage unit such that the main delivering controlling unit determines the position of a recording medium stored in the storage unit in relational association with the ID information and subsequently feeds this recording medium, when said ID information obtaining section has obtained the ID information;
wherein said main delivering controlling unit includes storing space managing means which obtains information on the number of a plurality of storage units connected thereto and generates management information capable of managing the storage spaces of the plurality of storage units in a collective manner.

With the above-described construction, with variable setting of the number of the storage units interconnected (this will be referred to as "connection number" hereinafter), it is possible to change the number of recording media which can be stored. With such setting of the connection number of storage units, the main delivering controlling unit will execute the control of management of the storage spaces of the plurality of storage units, based on storage space management information generated by the storing space managing means. As a result, there is achieved a delivery system capable of effecting management of storage spaces appropriately even when the storage units for storing recording media are increased or decreased in number.

According to a modified construction of the present invention, the system includes a plurality of cases, said each case holding therein said storage unit and said delivering unit;
one of the cases includes said main delivering controlling unit; and
said main delivering controlling unit obtains the management information generated by the storing space managing means provided in said each case and then executes the management of the storage spaces of the storage units in the plurality of cases and control of the feeding units in the plurality of cases. With this construction, with variable setting of the connection number, it is possible to change the number of storage media which can be stored, so that the main delivering controlling unit can execute the management of the storage spaces in correspondence with the storage spaces in accordance with this change. Moreover, this main delivering controlling unit can control the feeding unit in each case to deliver the recording medium from the storage space.

According to a further modified construction of the present invention, the system can further comprise a printing unit for printing image data on the recording medium and an automatic charging unit for charging/storing the recording medium printed by the printing unit in the storage unit. With this construction, it becomes also possible to automatically charge a recording medium printed by the printing unit to the storage unit.

According to a still further modified construction of the present invention, the plurality of storage units are connected and the single feeding unit effects feeding of the recording medium stored in the respective storage unit; and
the main delivering controlling unit obtains the management information generated by the storing space managing means and then executes the management of the storage spaces of the storage units and the control of the feeding unit. With this construction, with variable setting of the connection number of the storage units, it is possible to set the number of the recording media which can be stored. And, even with such variable setting of the connection number, the recording media can still be fed by the single feeding unit.

Further and other features and advantages of the present invention will become apparent upon reading the detailed disclosure of some presently preferred embodiments thereof with reference to the accompanying drawings.

### BFIEF DESCRIPTION OF THE DRAWINGS

[Fig. 1] a perspective view showing an entire construction of a delivery system,
[Fig. 2] a perspective view of a receiving device,
[Fig. 3] a vertical section showing an inkjet printer, an enveloper and a delivering device,

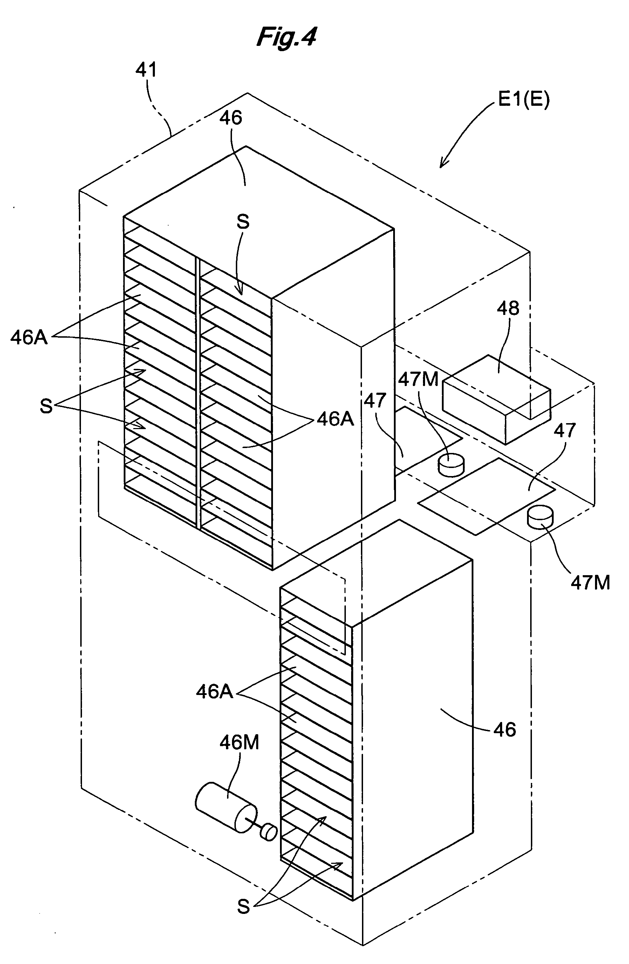

[Fig. 4] a perspective view showing the general construction of the delivering device,
[Fig. 5] a view showing an upper portion of the front face of the delivering device,
[Fig. 6] a block circuit diagram showing the controlling construction of the delivery system,
[Fig. 7] a diagram showing flows of information in the controlling construction,
[Fig. 8] a flowchart of a setup routine,
[Fig. 9] a flowchart showing sequence of a delivery process,
[Fig. 10] a front view of a delivering device of a modified embodiment of the first embodiment,
[Fig. 11] a side view of the delivering device of the modified embodiment of the first embodiment,
[Fig. 12] a perspective view showing the construction of the delivering device of the modified embodiment of the first embodiment,
[Fig. 13] a perspective view of a delivering device according to a second embodiment,
[Fig. 14] a plan view of the delivering device according to the second embodiment,
[Fig. 15] a perspective view showing the construction of the delivering device according to the second embodiment, and
[Fig. 16] a perspective view showing a mode of operations of a tray included in the delivering device according to the second embodiment.

### DETAILED DESCRIPTION OF THE PREFERRED EMBODIMENTS

Next, preferred embodiments of the present invention will be described with reference to the accompanying drawings.

### [Firs Embodiment: General Construction]

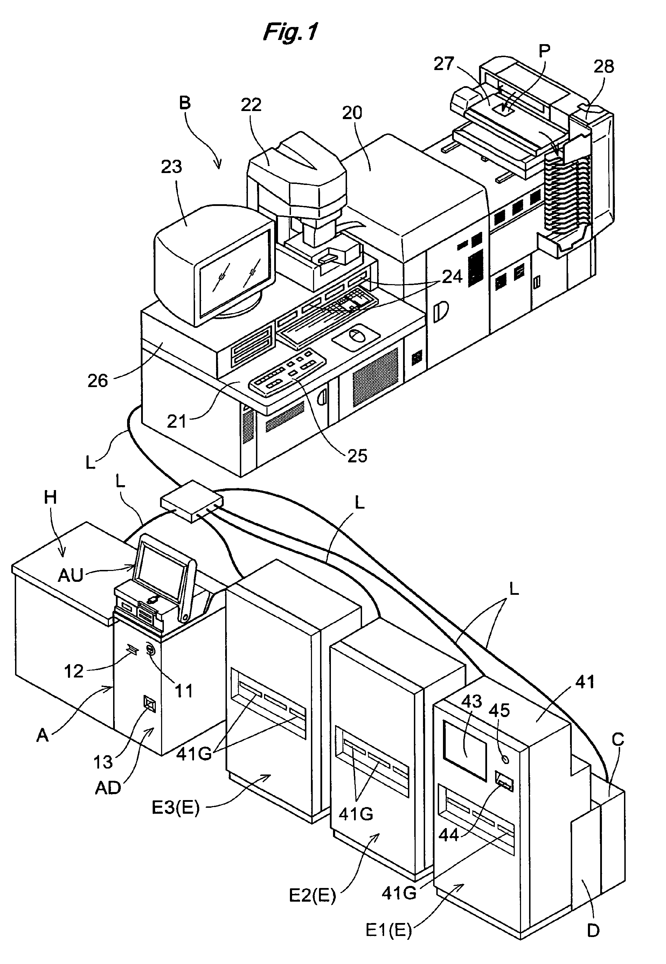

As shown in Fig. 1, a delivery system comprises a receiving device A, a silver halide photographic printer B for printing image data on a recording medium P which is a print paper, based on information from the receiving device A and a delivering device E.

This delivery system is assumed to be installed in a relatively large-scaled DPE photo service shop or a large-scaled electric appliance shop, etc. In such DPE shop or the like, the system is provided with a counter table H which allows receiving of a photographic film and receiving and processing of a customer's order associated therewith.

With this delivery system in operation, e.g. after the DPE shop is closed or in a situation without any shop attendant, a main delivering controlling means included in a delivering section E1 manages deliveries of processing bags Q from three delivering sections E1, E2, E3 (the specific construction of this will be described later herein).

### [Brief Overview of Processing]

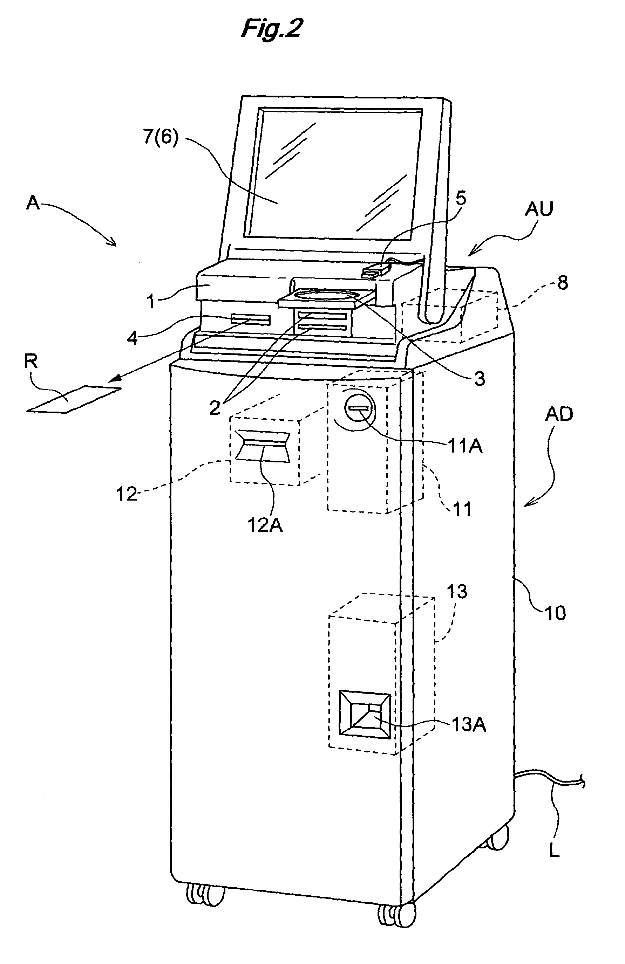

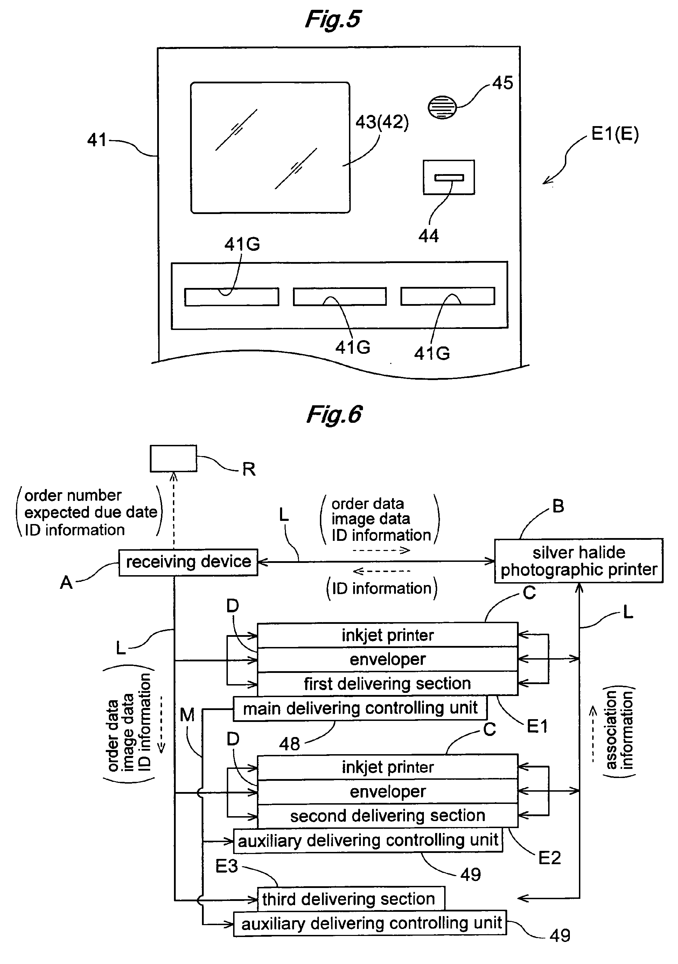

When the receiving device A receives an order for printing processing from a customer, this receiving device A obtains image data, receives payment for a charge corresponding to the order and prints out a receipt slip R (see Fig. 2 and Fig. 6) on which ID information, etc. are printed.

If the print size specified by the order received at the receiving device A is a relatively small size referred to as "service size", then, the image data received by the receiving device A is transmitted to the inkjet printer C and printed on the recording media P which are print papers. The printed recording media P are put into the processing bag Q at the enveloper D and the enveloper D charges this processing bag Q into a storage unit 46 of the delivering section (the first delivering section E1 or the second delivering section E2).

Or, if the print size specified by the order received at the receiving device A differs from the predetermined service size or is a size which is not frequently printed or the image date is to be recorded in a recording medium P comprised of a CD-R to be made into an electronic photo album, the image data received at the receiving device A is transmitted to the silver halide photographic printer B. The transmitted image data will then be printed on silver halide type recording media P by an operator or recorded in a CD-R to be manually put into the processing bag Q according to the customer's order. The recording media P comprised of printed image data or recording medium P comprised of a CD-R recording the image data therein will be manually charged to the third delivering section E3 by a DPE shop attendant.

After the storage of the processing bag Q at the delivering device E, if the customer is to receive the recording medium P, the customer causes a barcode reader 44 provided in the first delivering section E1 to read the ID information in the receipt slip R. With this, the processing bag Q containing the recording medium P associated with the ID information will be automatically fed from the delivering section E1, E2, E3 corresponding thereto, so that the customer can receive the processing bag Q thus fed.

Incidentally, if an order received at the receiving device A from a customer contains the service size and a non-service size(s) in a mixed state, then, the recording media P will be stored at two delivering sections separately, so two delivering processes will be carried out simultaneously and the customer will receive the recording media P from two delivering sections.

### [Receiving Device]

As shown in Fig. 2, the receiving device A consists of an upper receiving terminal AU and a lower charge receiving terminal AD. The receiving terminal AU includes, in a front face of a main body 1 thereof, a plurality of kinds of semiconductor drives 2 for obtaining photographic data from various semiconductor type memories (not shown) such as a "compact flash" (trademark) card, an SD card (trademark), a memory stick (trademark), a disc drive 3 for obtaining photographic data from various kinds of disc type media (not shown) such as a floppy disc (trademark), an MO, a CD-R, a receipt slip printer 4 for printing and discharging the receipt slip R and includes, in the upper face of the main body 1, a connector 5 to be connected to a mobile phone with a camera for obtaining photographic data therefrom, and a liquid-crystal type monitor 7 forming a touch panel 6 on its displaying face for displaying necessary data. Further, the receiving device A includes, inside its main body 1, a receiving controlling unit 8 for processing received information and transmitting the processed information via a communication cable.

The charge receiving terminal AD incorporates therein a coin receiving unit 11 for receiving a coin(s) from a coin inserting slot 11A provided at an upper position of a vertically elongated case 10 and a bill receiving unit 12 for receiving a bill(s) from a bill inserting slot 12A. At a lower position of the case 10, there is provided a small change discharging unit 13 for discharging small change(s) from a small change discharging outlet 13A.

With this receiving device A, in the receiving terminal AU, under a condition of a customer setting a medium to the semiconductor drive 2 or the disc drive 3 or the customer connecting a mobile phone to the connector 5, the customer touches his/her finger on the touch panel 6 in accordance with guidance displayed on the monitor 7, so that the receiving device A obtains the image data from the medium or the mobile phone and obtains also order data for e.g. a print processing.

With this system, the sequence of the receiving process is configured such that after obtaining an order, the order is completed upon the customer's payment of a charge required for the processing at the charge receiving terminal AD.

### [Silver Halide Photographic Printer]

The silver halide photographic printer B, as shown in Fig. 1, includes a housing 20 having a dark box construction. On the top surface of a console 21 provided at an end of this housing 20, there are mounted such devices as a film scanner 22, a monitor 23 for displaying information, a disc drive 24, a keyboard 25, etc. And, there is also provided a main printing controlling unit 26 for effecting process required for printing.

Further, the housing 20 accommodates therein, though not shown, an exposing section for effecting exposure on a recording medium P comprised of a print paper, a developing section for effecting development of the exposed recording medium, and a drying section for effecting drying of the developed recording medium. Outside the housing 20, there are provided a conveying belt 27 which receives the recording medium P after its drying, and a sorter 28 for sorting recording media conveyed from the conveying belt 27 according to the unit of each customer's order.

This sliver halide photographic printer B effects a printing operation by an operator or production of an electronic album using e.g. CD-R, based on the image data and the order data transmitted from the receiving device A.

### [Inkjet Printer]

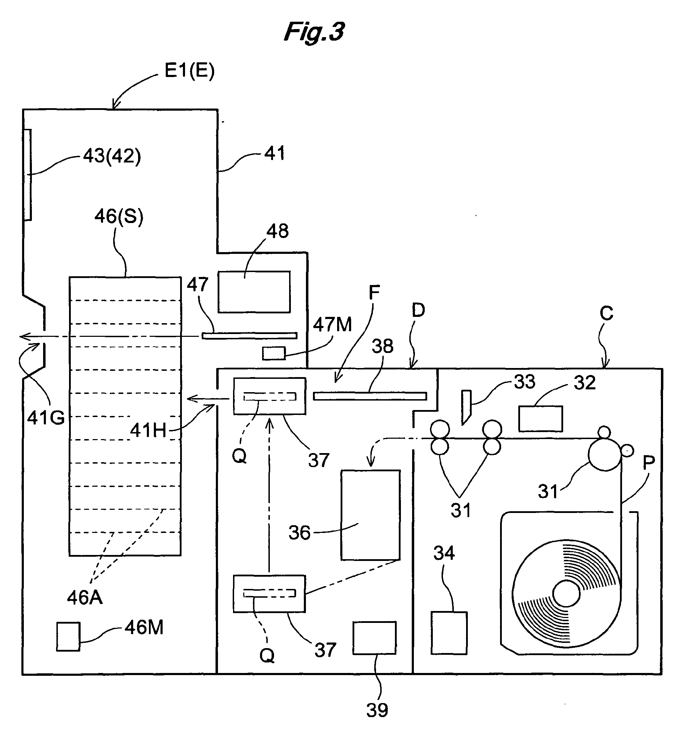

As shown in Fig. 3, in the inkjet printer C, there is formed a conveying passageway along which a plurality of clamping rollers 31 are arranged for conveying the recording medium P comprised of en elongate recording paper wound in the form of a roll. A print head 32 is provided for discharging ink onto the recording medium P conveyed along this conveying passageway along a sub scanning direction while the head 32 is moving back and forth along a main scanning direction normal to the sub scanning direction. A cutter 33 is provided for cutting the recording medium P printed with the image data by the print head 23 into a print size(s). And, a printing controlling unit 34 is provided for controlling these components of the printer.

With this inkjet printer C in operation, based upon the image data and the order data transmitted from the receiving device A, the printing controlling unit 34 controls the clamping rollers 31, the print head 32 and the cutter 33, thereby to realize the printing processing of the image data on the recording medium P made of a print paper. In succession thereto, the recording medium A printed with the image data will be fed to the enveloper D which is described next.

### [Enveloper]

As shown in Fig. 3, the enveloper D includes a charging section 36 which operates to stack a plurality of recording media P printed at the inkjet printer C for their temporary stacked storage and charges the stored recording media P into the processing bags Q according to the unit of the customer's orders, a shift mechanism 37 which mounts thereon and elevates the processing bag Q charged with the recording medium P at the charging section 36 and then moving it horizontally to set it at an inserting position, a pusher 38 which pushes the processing bag Q mounted on the shift mechanism 37 at the inserting position into the delivering device E, and a charging controlling unit 39 for controlling these components. Incidentally, the shift mechanism 37 and the pusher 38 together constitute an "automated charging unit" used in the present invention.

In this enveloper D, the charging controlling unit 39 executes a series of control operations in which the recording media P fed therein one after another from the inkjet printer C are inserted into the processing bags Q of sizes predetermined according to the customer's order units and closing the bags for packaging the recording media and these bags are then inserted to respective storage spaces of the delivering device E which will be described later.

In the instant embodiment, the enveloper D is configured to charge the recording medium P into the processing bag Q. Alternatively, the developer D can be configured also to effect, as packaging operations, charging of the recording medium into a box-like container or wrapping the recording medium P with resin sheet for its packaging.

### [Delivering Device]

The delivering device E comprises an assembly of the three delivering sections E1, E2 and E3, i.e. the first delivering section E1, the second delivering section E2 and the third delivering section E3, connected to one another. This delivering device E can be used with interconnecting a greater or smaller number of delivering sections or can be used without interconnecting the delivering sections at all.

As shown in Fig. 1 and Fig. 5, the first delivering section E1 includes a monitor 43 having a casing 41 with a touch panel 42 formed on its displaying front face thereof, a barcode reader 44 (an example of "ID information obtaining section") for reading ID information from the receipt slip R, and a speaker 45. At the center of the casing 41, there are formed three openings 41G for allowing a customer to take out the recording medium P charged in the processing bag Q. In the rear face of the casing 41, there is formed an inlet opening 41H for receiving the processing bag Q sent from the enveloper D.

Inside this casing 41, there are mounted two storage units 46 which are movable up/down, and an electrically driven type elevating motor 46M for lifting up/down the respective storage units 46. In the rear section of this casing 41, there are provided three feeding plates 47 (an example of "feeding unit") for feeding the processing bags Q stored in the storing spaces S of the storage units 46 through an opening 41G, and an electrically driven motor 47M for projecting/retracting these three feeding plates 47. Also inside this casing 41, there is provided a main delivering controlling unit 48 for controlling these components.

Each storage unit 46 is constructed as a rack including a plurality of supporting plates 46A for partitioning the inner space of the storage unit into a plurality of storing spaces S (storing compartments). Further, the two storage units 46 are disposed side by side on the right and left, with one having two columns of support plates 46A, the other having one column of support plates 46A, respectively.

These two storage units 46, as receiving drive force from the elevating motor 46M via a chain, are lifted up/down along guide rails (not shown). Further, a driving arrangement is provided in this lifting up/down such that the storage units 46 are lifted in opposite directions from each other so as to achieve good weight balance therebetween.

As the lifted position of the storage unit 46 is obtained by means of a sensor (not shown), it is made possible to obtain the positional relationship between each storing space S and the opening 41G as well as the positional relationship between each storing space S and the inlet opening 41H. Further, the position of the recording medium P (the position of the processing bag Q) stored in the storing space S is managed by the main delivering controlling unit 48.

With the above-described construction in operation, when a recording medium P charged in a processing bag Q is to be received from the enveloper D, the main delivering controlling unit 48 lifts up/down the storage unit 46 so as to move an empty storage space S not storing any processing bag Q therein to the position of the inlet opening 41H. Similarly, when a recording medium P charged in a processing bag Q is to be fed from the delivering device E, the storing unit 46 is lifted up/down to be moved the storing space S storing therein the processing bag Q to be fed to the position of the opening 41G.

The second delivering section E2 and the third delivering section E3 respectively lacks the monitor 43, the barcode reader 44 and the speaker 45, but include the feeding unit comprised of the storage units 46 and the feeding plates 47.

And, when a customer is to receive the recording medium P, the barcode reader 44 of the first delivering section E1 reads the ID information on the reception slip R. Then, if the recording medium corresponding to the read ID information is stored at any one of the storage units 46 in the three delivering sections E1, E2, E3, the main delivering controlling unit 48 will identify and specify the storing space S which stores the particular recording medium P associated with the ID information and will then lift up/down the storage unit 46 of a delivering section corresponding to this specified storing space S and operate the feeding plate 47 to feed the recording medium P charged in the processing bag Q from the opening 41G. With this, the customer can receive the recording medium P charged in the processing bag Q.

### [Controlling Construction of the System]

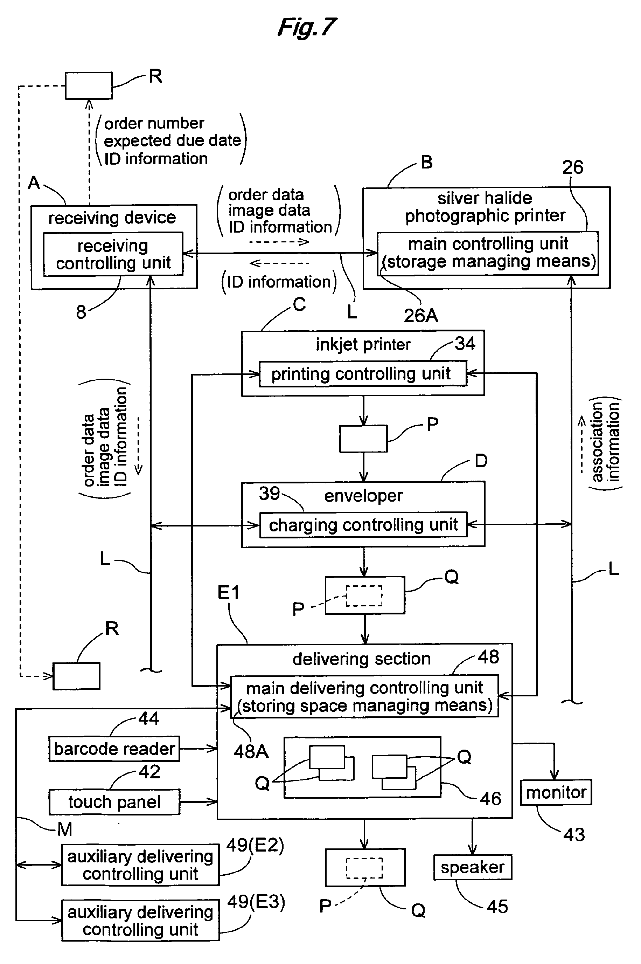

As shown in Fig. 6 and Fig. 7, there is provided a signal line for transmitting information from the receiving controlling unit 8 of the receiving device A to the main printing controlling unit 26 of the silver halide photographic printer B via a communication cable L. Further, there is provided a signal line for transmitting information from the receiving controlling unit 8 to the printing controlling unit 34 of the inkjet printer C, the charging controlling unit 39 of the enveloper D, and to the main delivering controlling unit 48 of the delivering section E1 via the communication cable L.

Further, the main delivering controlling unit 48, an auxiliary delivering controlling unit 49 of the second delivering section E2 and an auxiliary delivering controlling unit 49 of the third delivering section E3 are connected, with allowing signal access thereto via a signal cable M.

The main printing controlling unit 26 has a function of managing the entire delivery system of the invention. This main printing controlling unit 26 is configured to be capable of grasping storage states of the recording media P at the respective delivering sections E1, E2, E3 by obtaining, from the main delivering controlling unit 48 via the signal line, association information which associates the recording media P with the storing space S storing this recording media P.

The receiving controlling unit 8, the main printing controlling unit 26, the printing controlling unit 34, the charging controlling unit 39, the main delivering controlling unit 48 and the auxiliary delivering controlling units 49 respectively include a microprocessor and software for realizing the process corresponding thereto.

### [Setup of Managing Address]

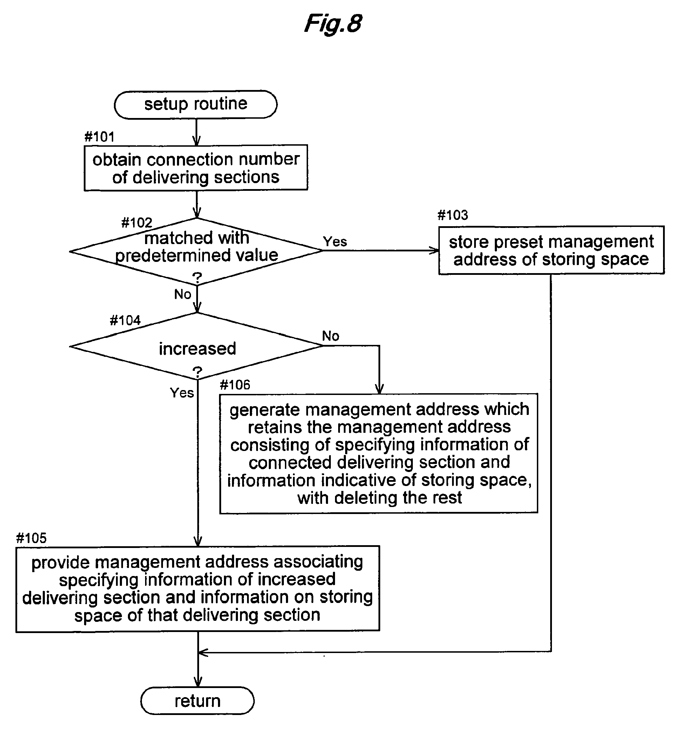

As described hereinbefore, as the delivering device E comprises the plurality of delivering sections, the main delivering controlling unit 48 is configured to be capable of carrying out setup for realizing controlling management of the storing spaces S in the plurality of storage units 46, in correspondence with the number of interconnected delivering sections (i.e. the "connection number"). A mode of this controlling is illustrated in the flowchart of Fig. 8.

That is to say, when the startup is initiated, a storing space managing means 48A of the main delivering controlling unit 48 effects signal access with the auxiliary delivering controlling unit 49, thereby to obtain the connection number of the delivering sections (step #101).

As a process for obtaining the connection number, with the connection of the signal cable M being established already, the storing space managing means 48A outputs a predetermined signal (a control code, a function, etc.). Whereas, if the delivering section is connected, the storing space managing means 48A obtains a return value of the auxiliary delivering controlling unit 49 thereof, so that based on this return value, information for specifying the connected delivering section is set and the number of the delivering sections is grasped.

Incidentally, for obtaining the connection number above, it is alternatively possible to effect a simple detecting process for electrically determining presence/absence of connection of connectors or the like.

With the above process, if the connection number agrees to the set value, a preset management address (an example of "management information") of the storing space S is stored (step #103).

This management address has a function of collectively managing the storing spaces S and has a structure comprising, in combination, specifying information which allows specification of a delivering section and information (address) indicative of the storing space S.

When a recording medium P has been stored at a predetermined storing space S, the storing space managing means 48A stores ID information associated with this recording medium P at the address corresponding to that storing space S included in the management addresses. Incidentally, in case the recording medium P has been sent out from the storing space S or the recording medium P is not stored in the storing space S, the storing space managing means 48A stores, at the address corresponding to this storing space S, information indicative of non-storing state.

That is to say, when the process is to determine presence/absence of a predetermined recording medium P at a storing space S in the storage units 46 in the respective delivering sections E1, E2, E3, the process is to search, from the information stored in the management address, information matching the ID information associated with the recording medium P. Similarly, when the process is to search a storing space S not storing any recording medium P, the process is to search, from the information stored in the management address, information indicative of not storing.

Next, if it is found that the connection number has become greater than the predetermined value, specifying information of the added delivering section(s) and the information indicative of the storing space S are added to the management address (step #104, step #105).

Further, if its is found that the connection number has become smaller than the predetermined value, there is generated management address with retains the addresses consisting of the specifying information on the connected delivering sections (inclusive of a case of only one delivering section being provided.) and the information indicative of the storing space S and with deleting the rest (steps #104, step #106).

That is to say, when the number of delivering sections is increased or decreased, upon completion of the setup, management address corresponding to (associated with) the number of the increased delivering sections is automatically generated without requiring any change in the software or operation of a switch or the like, so that the main delivering controlling unit 48 can control the delivery of the recording medium P from the delivering sections.

### [Procedure of Delivering Operation]

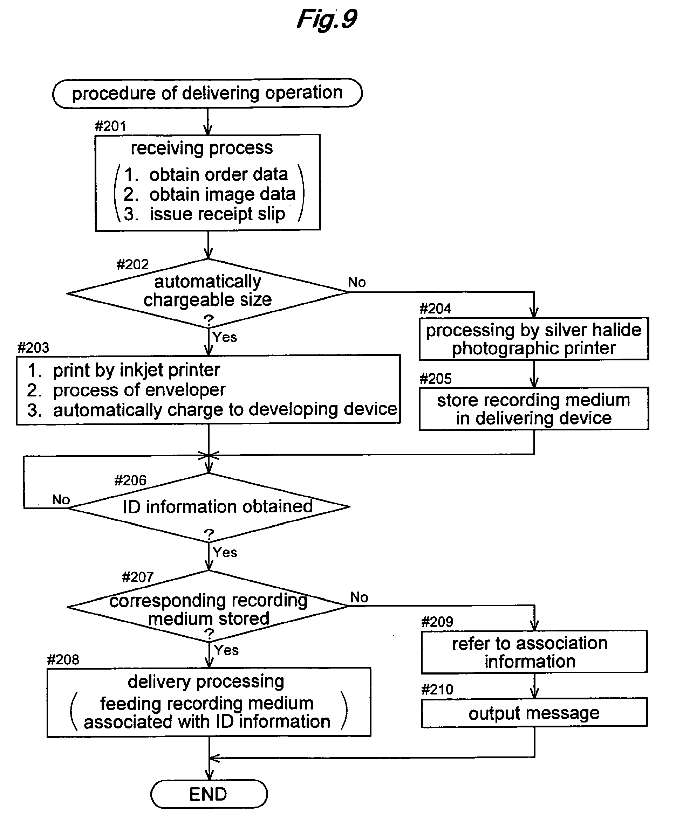

Fig. 9 shows a flowchart which illustrates the general flow of the procedure comprising making of recording medium P and delivery of this recording medium P to a customer, with use of the system construction shown in Fig. 6 and Fig. 7.

That is to say, the reception process is executed by a customer's setting of a medium recording image data therein to the receiving terminal AU of the receiving device A and then placing an order thereto (step #201).

More particularly, when the customer initiates the ordering process by touching, with e.g. his/her finger, an icon(s) displayed on the monitor 7 at the receiving device A, the receiving controlling unit 8 provides an order number and obtains order data relating to the required print size, the required number of prints, etc. for the printing processing.

Next, upon the above-described order setting, the receiving controlling unit 8 causes the monitor 7 to display the charge for the requested processing. In response, the customer will make the payment for the charge by putting a bill(s) and/or a coin(s) to the coin inserting slot 11A and/or the bill inserting slot 12A.. Then, the receiving unit 8 obtains the image data to be processed and a receipt slip R will be printed by the receipt slit printer 4. Specifically, in this receipt slip R, there are printed the order number for specifying/identifying the order, received monetary payment, the date of order reception, expected due date of requested product and also ID information comprised of a barcode.

Then, if the receiving controlling unit 8 determines based on the order data obtained as above that the requested print size(s) is (are) size(s) which can be automatically loaded from the enveloper D to the delivering device E, then, based upon the order data, the first delivering section E1 or the second delivering section E2 will be selected as a storage destination based upon the print size(s) and the type of recording paper.

Then, a printing processing based on the order data is effected at the inkjet printer C connected to the selected delivering section (either the first delivering section E1 or the second delivering section E2). Subsequent to this printing processing, the enveloper D will charge the printed recording medium P into a processing bag Q according to the customer's order unit and also charges this processing bag Q to that delivering section (step #202, step #203).

Especially, at step #202, if it is found that the size of one print size included in the plurality of prints in the order is a size which allows automatic charging from the enveloper D to the delivering device E and the other print size in the order is a size which does not allow the automatic charging from the enveloper D to the delivering device E (including the case where an electric photo album is to be made in a recording medium P comprising a CD-R disc), the receiving controlling unit 8 will transmit the image data and the order data to both the inkjet printer C and the silver halide photographic printer B.

In the course of the above-described series of processing, in the inkjet printer C, the printing controlling unit 34 receives the image data and the order data from the receiving controlling unit 8. Further, this printing controlling unit 34 controls the respective components of the inkjet printer C based on the order data, thereby to print the image data on the recording media P formed of print papers.

Further, in the enveloper D, the charging controlling unit 39 determines the number of prints included in the order by receiving the information from the printing controlling unit 34 and effects an operation of charging the number of prints of the recording media P corresponding to that order into a processing bag Q. When the processing bag Q is to be charged to the delivering section, the charging controlling unit 39 obtains the position information of the empty storing space S not storing a recording medium P at present, based upon the management address information and moves the shift mechanism 37 to an inlet opening 41H corresponding thereto. Incidentally, the above-described mode of processing may be modified, such that in obtaining the position information of the storing space S not storing any recording medium P therein, the information on the storing space S to be charged is obtained from the main delivering controlling unit 48 (in the case of the first delivering section E1) or from the auxiliary delivering controlling section 49 (in the case of the second delivering section E2).

In operative association with the above, the main delivering controlling unit 48 (in the case of the first delivering section E1) or the auxiliary delivering controlling section 49 (in the case of the second delivering section E2) controls the elevating motor 46M to move the processing bag Q to the position of the inlet opening 41H of the storing space S where it is to be stored. Information on completion of this movement will be transmitted to the charging controlling unit 39, so this charging controlling unit 39 will activate the pusher 38 to charge the processing bag Q into the storing space S.

When the processing bag Q has been charged into the storing space S, in association with the management address corresponding to this storing space S, ID information of the recording medium P charged in this processing bag Q will be stored and also the association information will be transmitted to the main printing controlling unit 26 to be stored therein. Incidentally, with this storage of the association information, the main printing controlling unit 26 can grasp the "whereabouts" of the recording medium P to be managed by the ID information and the silver halide photographic printer B can grasp presence/absence of delivery.

Moreover, if it is found, based upon the order data obtained at the receiving device A, the print size is not a size which allows automatic charging from the enveloper D to the delivering device E (including the case of making an electronic photo album in a recording medium P comprised of a CD-R disc), the sliver halide photographic printer B will carry out printing of the image data on the recording media P comprised of print papers. Or, the image data will be recorded in the recording medium P comprised of a CD-R disc to make an electronic photo album (steps #202, #204).

Upon completion of the processing at the silver halide photographic printer B described above, an attendant of the DEP shop will carry out a manual operation of putting the recording media P into a storing space S provided in the third delivering section E3 (step #205).

Upon completion of the above storage, the association information that associates the ID information of the recording media P with the position information of the storing space S will be transmitted to the main delivering controlling unit 48 to be stored therein and stored also in the main printing controlling unit 26. Incidentally, with the storage of this association information therein, the main printing controlling unit 26 can specify/identify the delivering section where the recording medium P managed by the ID information is stored and the silver halide photographic printer B can grasp the presence/absence of delivery.

Next, when the customer is to receive the recording medium P from the delivering device E, the customer causes the barcode reader 44 to read the ID information in the receipt slip R. With this, based upon the read ID information, the process will determine, based on the management address, presence/absence of the recording medium P associated with this ID information. As a result of this determination, if it is found that the recording medium P is stored at any one of the delivering section, the delivering section storing this recording medium P will be specified and the storing space S of its storing unit 46 is specified also. Then, the process effects a projecting operation of the feeding plate 47 (an example of "feeding unit"), so that the processing bag Q containing this recording medium P will be fed out of the opening 41G. With this, the customer can receive the processing bag Q containing the recording medium P therein (steps #206 through #208).

On the other hand, if it is found that the recording medium P associated with the ID information is not stored in the delivering device E (i.e. not stored in any one of the delivering sections), a message will be outputted on the monitor 43 and from the speaker 45 that indicates the delivering device E does not store the recording medium P associated with the ID information (steps #209 and #210).

### [Modified Embodiment of First Embodiment]

In the following discussion of this modified embodiment, the same components as used in the first embodiment will be denoted with the same reference marks or numerals as used in the first embodiment.

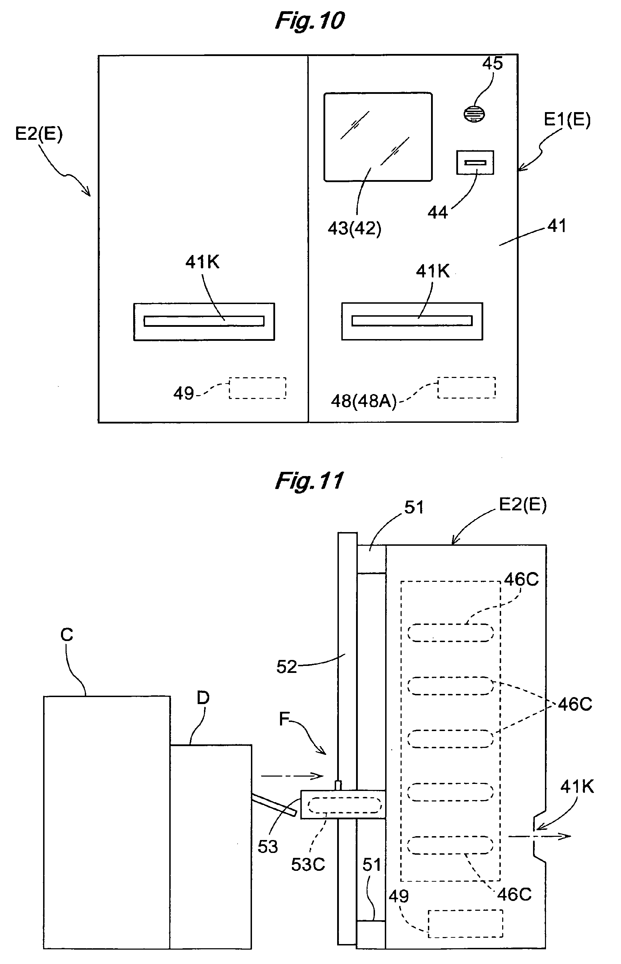

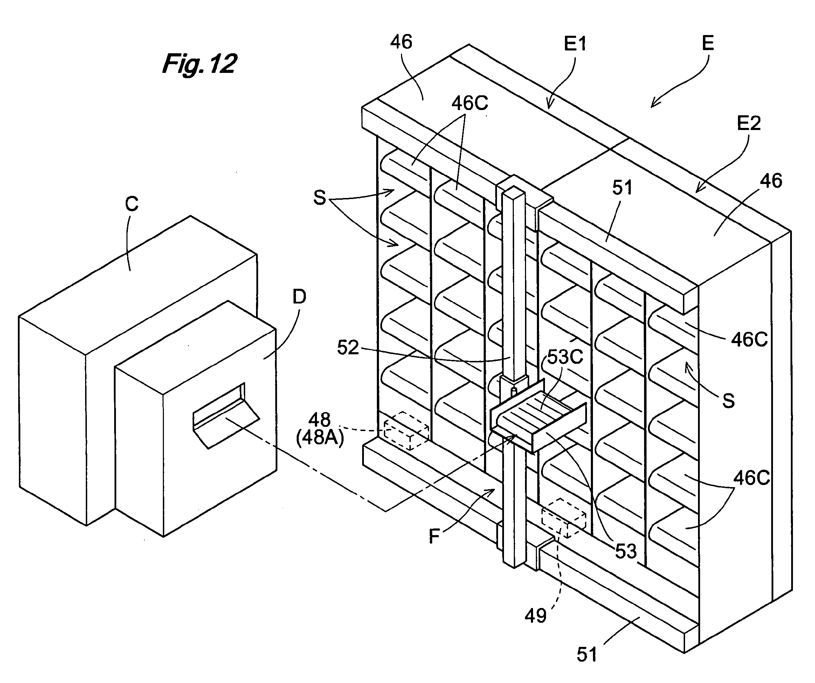

That is, as shown in Figs. 10-12, in this modified embodiment, the delivering device E consists of the first delivering section E1 and the second delivering section E2. For the storing spaces S provided in the storage units 46 of the first delivering section E1 and the second delivering section E2, there are respectively provided conveyer belts 46C (functioning as "feeding units"). To the front face of the first delivering section E1, there are mounted the monitor 43, the barcode reader 44 and the speaker 45. And, in the front faces of the first delivering section E1 and the second delivering section E2, there is respectively formed a discharging opening 41K for receiving the recording medium P fed from the storing space S.

In this modified embodiment, there is provided an enveloper D configured to charge the recording media P fed from a single inkjet printer C into a processing bag Q according to a customer's order unit. Further, to the rear face of the first delivering section E1 and the second delivering section E2 respectively, there is mounted an automatic charging unit F for feeding the processing bag Q fed from the enveloper D to each storing space S. Also, the first delivering section E1 includes the main delivering controlling unit 48 and the second delivering section E2 includes the auxiliary delivering controlling unit 49, respectively.

The automatic charging unit F includes a pair of horizontal rails 51, a vertical rail 52 movable back and forth in the horizontal direction along the horizontal rails 51, and a tray 53 vertically movable along the vertical rail 52. The tray 43 includes a conveyer belt 53C. The storing spaces S together constituting the storage units 46 of the first delivering section E1 and the second delivering section E2 are constructed in the form of racks and on the bottom wall portions of the spaces, there are provided conveyer belts 46C.

In this automatic charging unit F, a sensor (not shown) is provided for detecting the position of the movable vertical rail 52 and a sensor (not shown) is provided for detecting the variable level of the tray 53. Then, based upon these position (or level) detections, the main delivering controlling unit 48 drives respective motors (not shown), thereby to control the tray 53, so that the processing bags Q can be stored at the respective storing spaces S.

That is, when this automatic charging unit F is used to store a processing bag Q into a storing space S, the tray 53 will be moved to a position near the processing bag discharging position of the enveloper D and under this condition, the conveyer belt 53C operably coupled with the tray 53 will be operated to place the processing bag Q onto the tray.

Next, the tray 53 will be moved to the position corresponding to the target storing space S and then the conveyer belt 53C of the tray 53 and the conveyer belt 46C of the storing space S will be driven in synchronism, whereby the processing bag Q will be sent from the tray 53 into the storing space S.

Then, when the customer is to receive the recording medium P from the delivering device E, the customer causes the barcode reader 44 to read the ID information in the receipt slip R. In response to this, based upon the management address, the main delivering controlling unit 48 specifies/identifies the delivering section where the recording medium P associated with the ID information is stored and specifies/identifies also the storing space S in the storage unit 46 and drives the conveyer belt 46C of this storing space S. With this, the processing bag Q containing the recording medium P will be dropped off to the discharging opening 41K, so that the customer can receive the recording medium P contained in the processing bag Q from the discharging opening 41K. Incidentally, in this modified embodiment, the conveyor belt 46C of the storing space S functions as the "feeding unit".

In this modified embodiment, the connection number of the storage units 46 can be variably set as desired and the number of the horizontal rails 51 of the automatic charging unit F will be varied in accordance with this connection number of the delivering sections.

In this modified embodiment too, by effecting the setup of the management address, the storing space managing means 48A of the main delivering controlling unit 48 can obtain the connection number of the storage units 46 and generate management addresses of the storing spaces S to be managed.

### [Second Embodiment]

In the following discussion of this second embodiment, the same components as used in the first embodiment will be denoted with the same reference marks or numerals as used in the first embodiment.

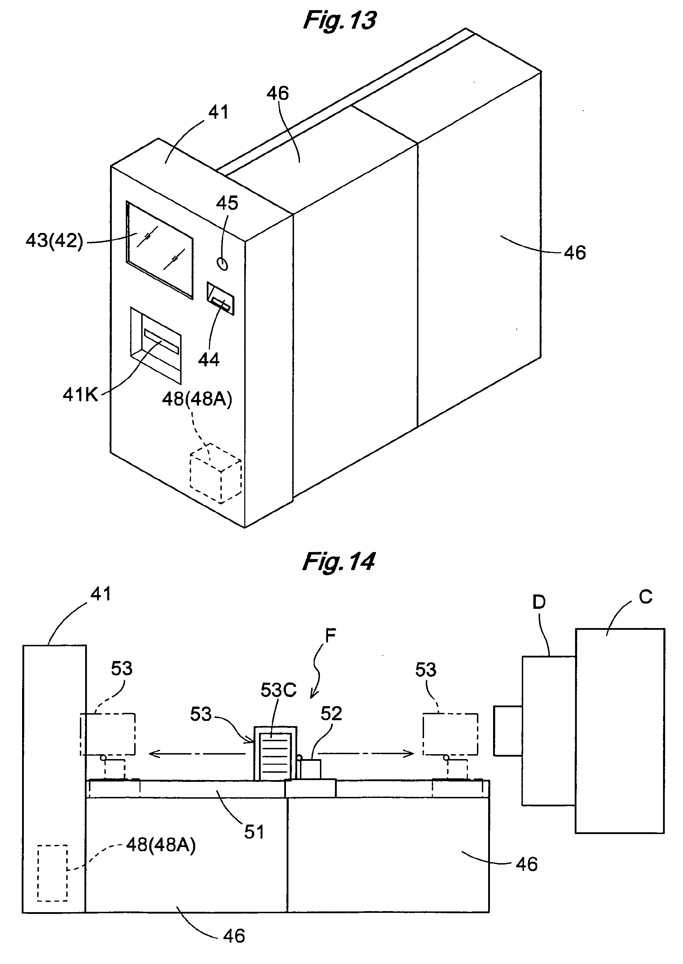

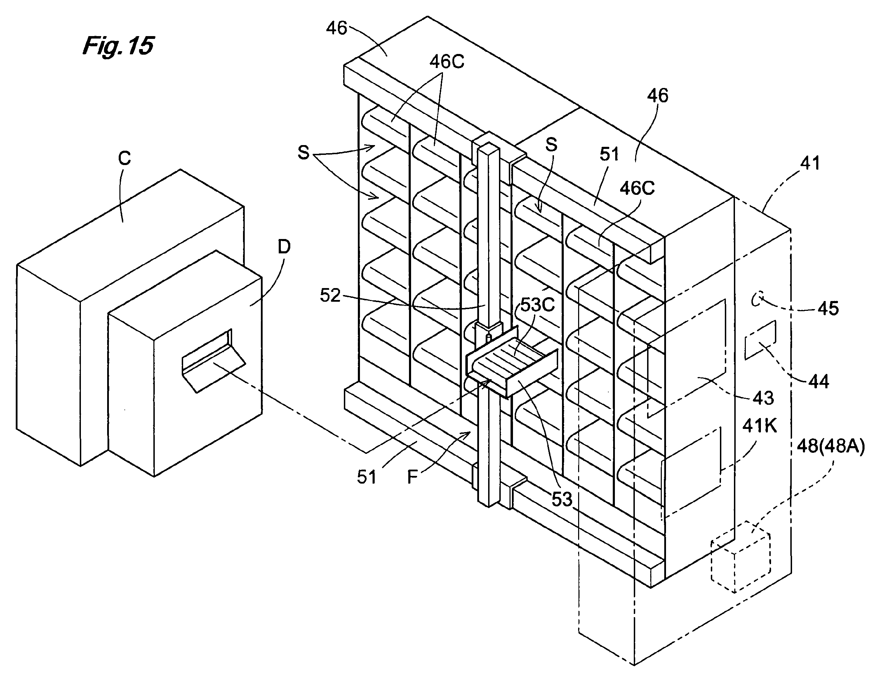

That is, as shown in Figs. 13-16, the delivering device E employed in this second embodiment includes a monitor 43, a barcode reader 44 and a speaker 45 mounted on the front face thereof and comprises two storage units 46 connected to each other.

In this delivering device E, there is provided an enveloper D configured to charge the recording media P fed from a single inkjet printer C into a processing bag Q. Further, there is provided an automatic charging unit F for feeding the processing bag Q fed from the enveloper D to each storing space S. This automatic charging unit F functions as a feeding unit configured to receive the recording medium P fed from the storing space S and to convey it to the discharging opening 41K for feeding it out therefrom.

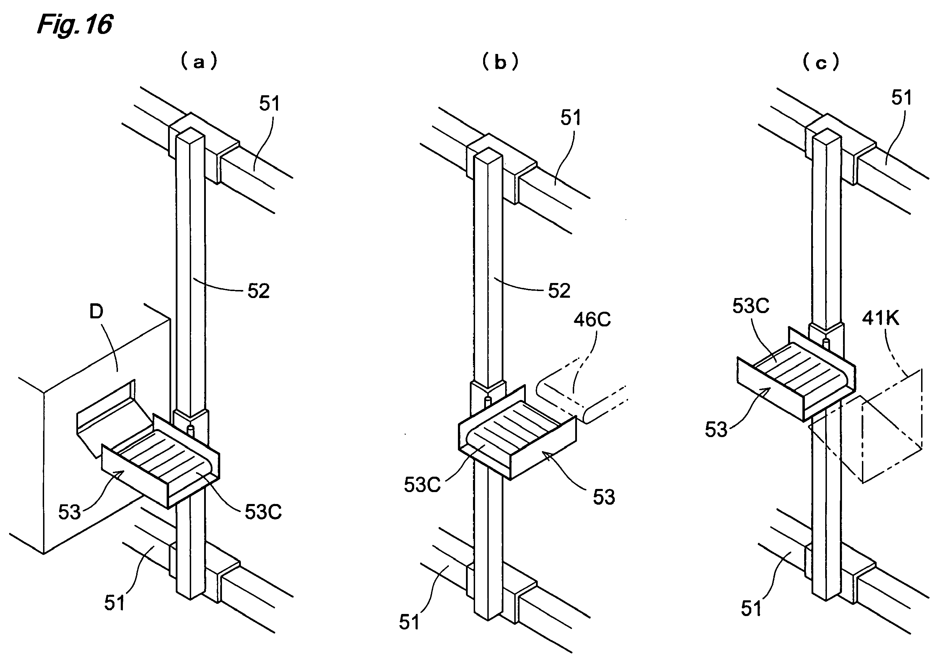

The automatic charging unit F includes a pair of horizontal rails 51, a vertical rail 52 movable back and forth in the horizontal direction along the horizontal rails 51, and a tray 53 vertically movable along the vertical rail 52. The tray 53 is pivotally supported to the vertical rail 52 to be pivotable for 90 degrees about a vertical axis as shown in Fig. 16. Further, there is provided a conveyer belt 53C on the mounting face of the tray 53. The storing spaces S together constituting the respective storage units 46 are constructed in the form of racks and on the bottom wall portions of the spaces, there are provided conveyer belts 46C.

The posture of the tray 53 can be varied as desired by pivoting the tray about the vertical axis. The posture wherein the conveying direction of the conveyer belt 53C of the tray 53 is aligned with the horizontal rails 51 as shown in Fig. 16 (a) and (c), will be referred to as the "conveying posture". Whereas, the posture wherein the conveying direction of the conveyer belt 53C of the tray 53 is in parallel with the conveying direction of the conveyer belt 46C of the storing space S will be referred to as the "charging posture"

In this automatic charging unit F in operation, a sensor (not shown) is provided for detecting the position of the movable vertical rail 52 and a sensor (not shown) is provided for detecting the variable level of the tray 53. Then, based upon these position (or level) detections, the main delivering controlling unit 48 drives respective motors (not shown), thereby to control the tray 53, so that the processing bags Q can be stored at the respective storing spaces S.

That is, when this automatic charging unit F is used to store a processing bag Q into a storing space S, as shown in Fig. 16 (a), the tray 53 as being set to the conveying posture will be moved to a position near the processing bag discharging position of the enveloper D, and under this condition, the conveyer belt 53C operably coupled with the tray 53 will be activated to place the processing bag Q onto the tray.

Next, the tray 53 will be moved to the position corresponding to the target storing space S and as shown in Fig. 16 (b), the posture of the tray 53 will be switched over to the charging posture, then the conveyer belt 53C of the tray 53 and the conveyer belt 46C of the storing space S will be driven in synchronism, whereby the processing bag Q will be sent from the tray 53 into the storing space S.

Thereafter, when the customer is to receive the recording medium P from the delivering device E, the customer causes the barcode reader 44 to read the ID information in the receipt slip R. In response to this, based upon the management address, the main delivering controlling unit 48 specifies/identifies the delivering section where the recording medium P associated with the ID information is stored and specifies/identifies also the storing space S in the storage unit 46. And, the tray 53 as being set under the charging posture, is moved to the position of this storing space S and the conveyer belt 46C of the storing space S and the conveyer belt 53C of the tray 53 are driven in synchronism with each other, so that the processing bag Q at the storing space S is received on the tray 53.

Then, while the tray 53, as being set under the conveying posture, will be moved to the position of the rear face of the discharging opening 41K, as shown in Fig. 16 (c), and the conveyer belt 53C of the tray 53 will be driven, thereby to drop the processing bag Q of the tray 53 to the discharging opening 41K. With this, the customer can receive the recording medium P contained in the processing bag Q from the discharging opening 41K.

In this second embodiment, the connection number of the storage units 46 can be set as desired and in accordance with this connection number of the delivering sections, the number of the horizontal rails 51 of the automatic charging unit F is varied.

In this second embodiment too, with the setup of the management address, the storing space managing means 48A of the main delivering controlling unit 48 obtains the connection number of the storage units 46 and can effect the production of the management address of the storing spaces to be managed.

### [Effects of the Embodiments]

With the above-described constructions, there is provided a delivering system capable of storing a number of recording media P corresponding to a number desired by a customer, with setting of the number of the delivering sections (storage units 46). And, when the number of recording media P to be stored is to be changed, with simply effecting the setup with desired setting of the connection number of the storage units, the main delivering controlling unit 48 can automatically generate management address corresponding to the number of connected delivering sections, without any special change in the software or without requiring any special switch operations or the like and can control the delivery of recording media P from the delivering sections based on this management address.

Further, by selectively using three delivering devices E in correspondence with the type of recording medium P, storage can be realized in a rational manner with restricting enlargement of the delivering device E. Also, respecting a medium which is printed frequently, such media can be handled by the automatic process from its printing to charging to the delivering device E. Moreover, the system can automatically control also the process when a customer receives the recording medium P from the delivering device E. So that, the system can also reduce the number of shop attendants required.

## Claims

1. A delivery system with:
a plurality of storage units (46) each of which has a plurality of storage spaces (S) for storing therein recording media (P) according to the unit of customer's order;
one or more feeding units (47, 46C, F) for feeding the recording media (P) stored in the storage unit (46) to the outside;
an identification (ID) information obtaining section (44) for obtaining ID information; and
a main delivering controlling unit (48) for controlling said storage unit (46) such that the main delivering controlling unit determines the position of a recording medium (P) stored in the storage unit (46) in relational association with the ID information and subsequently feeds this recording medium (P), when said ID information obtaining section (44) has obtained the ID information;
**characterized in that**
wherein said main delivering controlling unit (48) includes storing space managing means (48A) which obtains information on the number of a plurality of storage units (46) connected thereto and generates management information capable of managing the storage spaces (S) of the plurality of storage units (46) in a collective manner.

2. The delivery system according to claim 1, **characterized in that** the system includes a plurality of cases (41), said each case (41) holding therein said storage unit (46) and said delivering unit (47, 46C, F);
one of the cases (41) includes said main delivering controlling unit (48); and
said main delivering controlling unit (48) obtains the management information generated by the storing space managing means (48A) provided in said each case and then executes the management of the storage spaces (S) of the storage units (46) in the plurality of cases (41) and control of the feeding units (47, 46C, F) in the plurality of cases.

3. The delivery system according to claim 1 or 2, **characterized by** a printing unit (C) for printing image data on the recording medium (P) and an automatic charging unit (37, 38, F) for charging/storing the recording medium (P) printed by the printing unit (C) in the storage unit (46).

4. The delivery system according to claim 1, **characterized in that** the plurality of storage units (46) are connected and the single feeding unit (47, 14C, F) effects feeding of the recording medium (P) stored in the respective storage unit (46); and
the main delivering controlling unit (48) obtains the management information generated by the storing space managing means (48A) and then executes the management of the storage spaces (S) of the storage units (46) and the control of the feeding unit (47, 46C, F).

5. The delivery system according to claim 4, **characterized by**
a printing unit (C) for printing image data on the recording medium (P) and
an automatic charging unit (37, 38, F) for charging/storing the recording medium (P) printed by the printing unit (C) in the storage unit (46).
